# EUROPEAN PATENT SPECIFICATION

(11) **EP 1 229 999 B1**
(45) Date of publication and mention of the grant of the patent: **26.05.2004**
(21) Application number: 00950089.3
(22) Date of filing: 28.07.2000
(51) Int. Cl.: B01D 65/02, B01D 61/02, C02F 1/44

(54) **A PROCESS FOR THE REMOVAL OF ORGANIC SUBSTANCES (TOC), PESTICIDES, OR OTHER SUBSTANCES FROM A SALT SOLUTION**
VERFAHREN ZUR BESEITIGUNG ORGANISCHER STOFFE (TOC), SCHÄDLINGSBEKÄMPFUNGMITTELN, ODER ANDEREN STOFFEN AUS EINER SALZLÖSUNG
PROCEDE D'EXTRACTION DE SUBSTANCES ORGANIQUES (COT), DE PESTICIDES, OU D'AUTRES SUBSTANCES CONTENU(E)S DANS UNE SOLUTION SALINE

(30) Priority: 03.09.1999 NL 1012975
(43) Date of publication of application: 14.08.2002
(73) Proprietor: DHV Water B.V., NL-3818 EX Amersfoort (NL); N.V. Waterleidingmaatschappij Oost-Brabant, 5211 HX 's-Hertogenbosch (NL); STORK FRIESLAND B.V., 8401 DT Gorredijk (NL); N.V. Waterleiding Friesland, 8911 BN Leeuwarden (NL)
(72) Inventor: WESSELS, Leo, Peter, NL-3813 RN Amersfoort (NL); VAN PAASSEN, Wilhelmus, Cornelis, NL-5283 LT Boxtel (NL); FUTSELAAR, Harry, NL-7511 KH Enschede (NL); VAN DER MEER, Walterus, Gijsbertus, Joseph, NL-8604 VM Sneek (NL)
(74) Representative: Kupecz, A., Drs. c.s.
(86) International application number: PCT/NL2000/000545
(87) International publication number: WO 2001/017666

(56) References cited:
- EP-A- 0 470 015
- FR-A- 2 677 895
- FR-A- 2 697 446
- US-A- 5 066 402
- US-A- 5 491 259

## Description

The present invention relates to a process for the removal of organic substances (TOC) from an aqueous salt solution, for example, from a regenerate derived from water purification.

For the removal of monovalent ions, especially in the field of water treatment, one uses desalting membranes, for example RO (reverse osmosis), whereas for the removal of bivalent ions as well as for the removal of organic compounds, pesticides or other compounds but also for the removal of organic compounds such as humic acids, and other organic compounds in solution (TOC), nanofiltration is used. The water is then decolourized, for example, by passing pre-treated groundwater comprising 4-8 mg/l TOC and a colour of 15-50 mg/ Pt/l, through an ion exchanger, whereby humic acids are exchanged for chloride ions. It has been found that for approximately 6-14 weeks the ion exchanger is capable of removing colour for almost 100%, after which, however, the colour content in the effluent increases.

This is the signal indicating that the ion exchanger needs to be regenerated, whereby the organic compounds such as humic acid deposited on the resin, are exchanged for chloride ions.

The liquid released in this process is called the regenerate, and it comprises approximately 2,000-10,000 mg/l TOC, approximately 25-125 g/l Na and approximately 25-125 g/l Cl.

After regeneration the ion exchanger is put into operation again.

The regenerate enriched with organic compounds forms a serious environmental problem and cannot simply be dumped. In the present-day technique the regenerate is evaporated, and the evaporation residue removed.

Until now one has endeavoured to treat such seriously TOC-contaminated regenerates in desalting membranes, trying to limit the occurrence of concentration polarization in order to avoid the accumulation of salts at the membrane surface; the result is that not only the undesirable organic compounds are retained, but also a high percentage of the salts. This is undesirable especially if one wishes to reuse the thus treated regenerate for the regeneration of the ion exchanger used for the water treatment. In the prior art one has attempted to avoid the polarization concentration, i.e. the accumulation of salts at the membrane surface, by means of continuous longitudinal flow using liquid or a gas/liquid mixture. The limitation of the concentration polarization is important in view of
1. scaling problems;
   if the solubility product is exceeded, precipitation may occur at too high a concentration polarization.
2. retention of salts;
   at too high a polarization concentration the retention, i.e. the removal of salts, decreases.

In the prior art technique the longitudinal flow with nanofiltration and reverse osmosis (RO) installations in which tubular, capillary, hollow fibre or helical membranes are employed, is realized by
1. continuous discharge of concentrate
2. circulation over the membrane.

The invention provides a process for the removal of organic compounds (TOC), pesticides or other specific compounds from a salt solution, for example, a regenerate from the water purification, characterized in that the TOC-comprising aqueous salt solution is treated in a desalting membrane according to the dead-end principle wherein no longitudinal flow over the membrane with air and/or water takes place, whereafter the obtained permeate is reused and the concentrate obtained after flushing is discharged.

According to the present invention, the above-described phenomenon of concentration polarization, which occurs when employing desalting membranes, is combined with the so-called dead-end principle, wherein the salt solution to be treated is introduced into the membrane module at the feed side, without applying a longitudinal flow over the membrane with gas and/or liquid. Consequently, there is no recirculation and moreover, the concentrate is not continuously discharged. The dead-end principle is generally used in micro and ultrafiltration techniques not involving desalting membranes. Micro and ultrafiltration do not remove humic acids (TOC) and pesticides. FR-A-2 697 446 mentions the use of dead-end principle with reverse osmosis and nanofiltration in water treatment processes.

Surprisingly it has been found that by operating in this way the effect of the membrane undergoes a drastic change. In contrast with the known technique, in the dead-end application the salts are not retained or only to a lesser degree.

It has been shown that the desalting membrane does not, or only to a lesser degree, remove salts, whereas in contrast, the undesirable organic compounds such as, for example, humic acids or pesticides or other compounds, are removed.

The reason that this according to the invention is possible, is to be found in the high concentration polarization created by the dead-end application of the desalting membranes. In summary, the result according to the invention is that, due to the specific manner of applying the dead-end principle, wherein no longitudinal gas and/or liquid flow over the membrane takes place, a high polarization concentration at the membrane surface is realized, thereby changing the effect and/or the properties of the desalting membrane. The surprising consequence is that with the aid of the desalting membranes applied according to be present technique, very specific compounds, often of the organic type, can be removed without desalting.

According to the present invention, good results are obtained when a TOC-comprising aqueous salt solution is introduced at the feed side of the membrane at a flux of 5-75 1/(m²xhours), a feed pressure of 4-12 bars for 30-40 minutes, while the obtained TOC-depleted permeate is discharged.

Typically, prior to treatment the aqueous salt solution to be treated according to the invention contains approximately 2000 mg/l TOC, approximately 105 g/l Na⁺ and approximately 60 g/l Cl⁻, whereas after treatment the obtained permeate contained approximately only 40 mg/l TOC and still approximately 105 g/l Na⁺ and approximately 60 g/l Cl⁻.

The membranes to be employed according to the invention are the usual tubular, capillary, hollow fibre or helical membranes.

An example of the membrane employed according to the invention is a commercially available membrane from Stork, membrane type NX 4505 having the following specified characteristics in the case of longitudinal flow being applied:
- MgSO₄ retention (0.5% solution by weight) >95%
- NaCl retention (2.5% solution by weight) <50%
- diameter tubulars 5.2 mm.

It was established that when operating such an installation with continuous longitudinal flow by recirculation, an approximately 70% retention of salts takes place (measured as electric conductivity, EC). When the same membrane is applied according to the invention, that is to say without longitudinal flow, the retention of EC diminishes very quickly within a few minutes to practically 0%. In both cases no concentrate discharge was observed.

The present invention may generally be applied for the treatment of liquids having a relatively high content of organic compounds, for example, humic acids, or pesticides or other specific compounds where only the organic compounds, *casu quo* pesticides or other specific compounds are to be removed and not the inorganic salts.

An example of such an application is the treatment of a regenerate derived from water purification. Said regenerate is a product obtained when winning drinking water from groundwater that has a high content of organic compounds, such as humic acids. The groundwater is fed into a column filled with a resin having a granular size of several millimetres, which resin is charged with ions. By letting the ground water flow over the granules ion exchange takes place on the resin, with the result that the resin becomes ever more loaded with humic acids until the resin becomes, as it were, saturated. At this point the resin needs to be regenerated, by the resin being flushed with a strong salt solution (100-150 g/l), whereby the humic acids are exchanged for the salt. The thus obtained aqueous liquid having a high humic acid and salts concentration is called the regenerate, which in the prior art is often evaporated in situ, the solid material (salt and humic acid) being discharged. From an environmental and economical viewpoint, however, this is undesirable. The application of the present process effectively eliminates this problem, with the result that after separating the humic acids from salt solution, the salt solution can be reused for a subsequent regeneration of the ion exchanger, enriched with fresh salt.

This is a typical example in which a combination of techniques such as ion exchange and dead-end nanofiltration makes it possible to efficiently and permanently remove organic compounds (in this case humic acids) from aqueous liquids.

Another application according to the present process, is concerned with the treatment of seawater, prior to purification, in which treatment dead-end nanofiltration is used. The organic compounds such as humic acid that are present in the sea water, can be eliminated more efficiently by applying the present process than with the aid of applied pre-purification by microfiltration or ultrafiltration. This pre-treatment limits the contamination of the RO membranes used with sea water desalting.

Yet another application concerns the specific removal of pesticides, in which use is made of dead-end RO.

It goes without saying that the process according to the invention is not limited to the above-mentioned application possibilities.

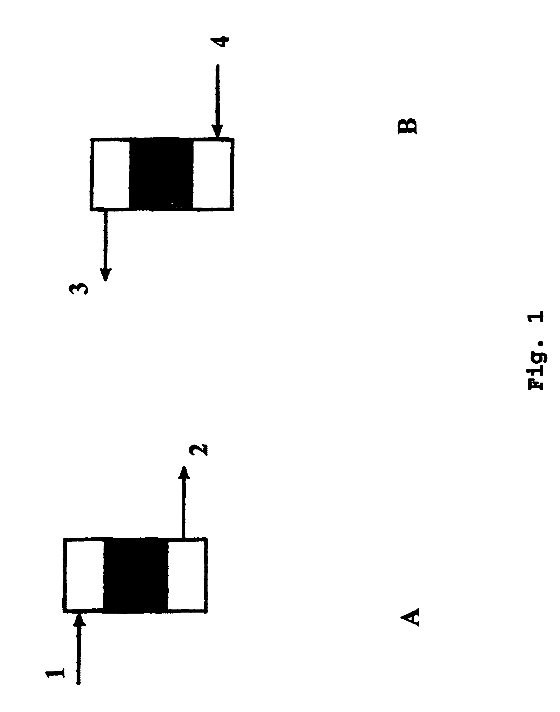

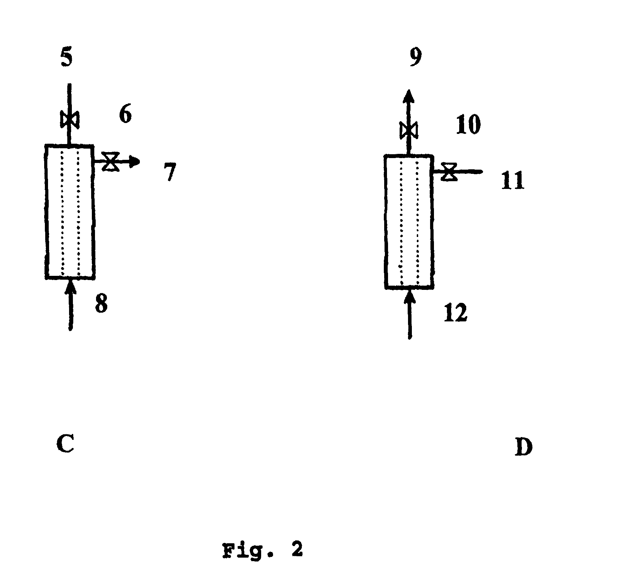

The invention will now be elucidated with reference to the treatment of dyed drinking water as represented by the appended plan of steps 1 - 4 (Figures 1 and 2).
1 = drinking water
2 = decolourized drinking water
3 = fouled regenerate
4 = clean regenerate
5 = no concentrate/discharge
6 = (concentrate valve closed)
7 = permeate/product discharge (valve = open)
8 = feed (= regenerate)
9 = concentrate/discharge
10 = (concentrate valve open)
11 = no permeate/product discharge (valve = closed)
12 = feed (flushing liquid + air)

A = Ion exchange during operation
B = Ion exchange during regeneration
C = Nanofiltration during operation (dead-end)
D = Nanofiltration during flushing/concentrate discharge

Step 1. Drinking water is passed through an ion exchanger.
Step 2. The ion exchanger is regenerated.
Step 3. The regenerate is treated according to the invention and
Step 4. Flushing/discharge of concentrate.

### 1. Drinking water is passed through an ion exchanger.

Pre-treated ground water composed of approximately 5-6 mg/l TOC and a dye of approximately 25 mg Pt/l is passed through the ion exchanger from the top to the bottom, the chloride content being negligible (<200 mg/l). In the ion exchanger the organic compounds, such as humic acids, are exchanged for chloride ions. For about 6-14 weeks the ion exchanger is shown to be capable of removing virtually 100% of the organic compounds, after which the capacity to remove diminishes, with the result that the colour content in the effluent increases.

### 2. The ion exchanger is regenerated.

When regenerating, the ion exchanger is flushed from the bottom to the top with a colourless salt solution comprising approximately 100-150 g/l NaCl. The humic acid bound to the resin is exchanged for chloride ions. The liquid released at the top of the ion exchanger, being the (fouled) regenerate, has the following composition: approximately 2000 mg/l TOC, approximately 105 g/l Na and approximately 60 g/l Cl. After regeneration the ion exchanger is put into operation again.

### 3. The regenerate is treated according to the invention.

The fouled regenerate from the ion exchanger is subsequently treated according to the present process via dead-end nanofiltration. The valve in the concentrate conduit is closed, which means, that no discharge of concentrate takes place, nor recirculation. The valve in the permeate/product outlet is open. This operational condition is maintained for 30-40 minutes, yielding a recovery of approximately 80-90%. The regenerate is supplied at a flux of approximately 15 to approximately 25 l/(m²xh) at a pressure of approximately 8 bars.

The thus obtained permeate/product from the nanofiltration (NF) contains approximately 40 mg/l TOC and approximately 105 g/l Na and approximately 60 g/l Cl, which permeate can be reused for the regeneration of the ion exchanger, after the permeate has been further enriched with salt.

Surprisingly, thanks to the high concentration polarization at the membrane surface, this involves virtually no removal of Na and Cl, while the humic acids (TOC) are removed almost completely, that is to say for about 98%.

### 4. Flushing/concentrate discharge.

After a certain recovery has been achieved, i.e. after a certain time, the content of the NF module, i.e. the concentrate, is blown out. To do this, the NF module is flushed for a few seconds with air and water, while the valve in the concentrate discharge conduit remains open. Blowing out takes place at low pressure and during blow-out the valve in the permeate product outlet is closed.

The thus obtained concentrate has a high TOC content (typically approximately 5000-100,000 mg/l TOC) and comprises the same amount of salt as the permeate (during experiment: approximately 105 g/l and approximately 60 g/l Cl). The obtained concentrate (typically 5-20% of the feed) is further processed and discharged.

After blow-out the NF module is put into operation (operational phase 3) again.

## Claims

1. A process for the removal of organic substances - TOC-, pesticides or other specific compounds from an aqueous salt solution, for example from a regenerate derived from water purification with ion-exchangers, wherein the TOC-comprising aqueous salt solution is treated in a nanofiltration or reverse osmosis membrane according to the dead-end principle wherein no longitudinal flow over the membrane with air and/or water takes place, **characterized in that** concentration polarization at the membrane surfaces is realized such that the membranes do not, or only to a lesser degree, retain salts, whereafter the obtained permeate is reused and the concentrate obtained after flushing with air and water is discharged.

2. A process according to claim 1, **characterized in that** the membrane is tubular, capillary, hollow fibre or helically wound.

3. A process according to claim 1 and 2, **characterized in that** the TOC-comprising aqueous salt solution is introduced at the feed side of the membrane module at a flux of 5-75 l/(m²/h), a feed pressure of 4-12 bars for 30-40 minutes, while the obtained TOC-depleted permeate is discharged.

4. A process according to claim 1 - 3, **characterized in that** the flux is 15-25 l/(m²·h), the pressure is approximately 8 bars in a dead-end filtration cycle of approximately 30 minutes.

5. A process according to claim 1 - 4, **characterized in that** prior to treatment the aqueous salt solution contains approximately 2000 mg/l TOC, approximately 105 g/l Na⁺ and approximately 60 g/l Cl⁻, whereas after treatment the obtained permeate contains approximately 40 mg/l TOC, approximately 105 g/l Na⁺ and approximately 60 g/l Cl⁻.

## Patentansprüche

1. Verfahren für das Entfernen organischer Substanzen (-TOC-), Pestiziden oder anderen spezifischen Verbindungen aus einer wässrigen Salzlösung, beispielsweise aus einem Regenerat, das aus der Wasseraufreinigung mit Ionenaustauschern stammt, wobei die TOC-haltige, wässrige Salzlösung mit einer Nanofiltrations- oder einer Umkehrosmosemembran nach dem Dead-End-Prinzip behandelt wird, wobei durch die Membran kein längsgerichteter Fluss von Luft und/oder Wasser stattfindet, **dadurch gekennzeichnet, dass** die Polarisierung der Konzentration an den Membranflächen so umgesetzt wird, dass die Membranen Salze gar nicht bzw. nur in geringem Maß zurückhalten, woraufhin das erhaltene Permeat wiederverwendet und das nach Durchspülen mit Luft und Wasser erhaltene Konzentrat verworfen wird.

2. Verfahren nach Anspruch 1, **dadurch gekennzeichnet, dass** die Membran röhrenförmig oder kapillarförmig ist, aus einer hohlen Faser besteht oder helikal gewunden ist.

3. Verfahren nach Anspruch 1 und 2, **dadurch gekennzeichnet, dass** die TOC-haltige, wässrige Salzlösung auf der Retentatseite des Membranmoduls mit einem Fluss von 5-75 l/(m²/Std.) und einem Zufuhrdruck von 4-12 Bar über 30-40 Minuten zugeführt wird, während das erhaltene, TOC-depletierte Permeat abgeschieden wird.

4. Verfahren nach Anspruch 1 - 3, **dadurch gekennzeichnet, dass** in einem Dead-End-Filtrationszyklus von etwa 30 Minuten der Fluss 15-25 l/(m²/Std.) und der Druck etwa 8 Bar beträgt.

5. Verfahren nach Anspruch 1 - 4, **dadurch gekennzeichnet, dass** die wässrige Salzlösung vor der Behandlung etwa 2000 mg/l TOC, etwa 105 g/l Na⁺ und etwa 60 g/l Cl⁻ enthält, wohingegen das erhaltene Permeat nach der Behandlung etwa 40 mg/l TOC, etwa 105 g/l Na⁺ und etwa 60 g/l Cl⁻ enthält.

## Revendications

1. Procédé d'extraction de substances organiques (COT), de pesticides ou d'autres composés spécifiques contenu(e)s dans une solution saline aqueuse, par exemple, à partir d'un régénérat dérivé d'une purification de l'eau par des échangeurs d'ions, dans lequel la solution saline aqueuse comprenant les COT est traitée dans une membrane de nanofiltration ou d'osmose inverse suivant le principe de filtration frontale dans lequel aucun écoulement longitudinal sur la membrane avec de l'air et/ou de l'eau n'a lieu, **caractérisé en ce que** la polarisation de concentration aux surfaces des membranes est réalisée de telle sorte que les membranes ne retiennent pas les sels, ou seulement à un degré moindre, après quoi le perméat obtenu est réutilisé et le concentré obtenu après rinçage à l'air et à l'eau est évacué.

2. Procédé suivant la revendication 1, **caractérisé en ce que** la membrane est tubulaire, capillaire, à fibres creuses ou hélicoïdale.

3. Procédé suivant les revendications 1 et 2, **caractérisé en ce que** la solution saline aqueuse comprenant les COT est introduite côté alimentation du module à membrane selon un flux de 5 à 75 l/(m²/h), une pression d'alimentation de 4 à 12 bars pendant 30 à 40 minutes, tandis que le perméat appauvri en COT est évacué.

4. Procédé suivant les revendications 1 à 3, **caractérisé en ce que** le flux est compris entre 15 et 25 l/(m²/h), la pression est approximativement de 8 bars dans un cycle de filtration frontale d'approximativement 30 minutes.

5. Procédé suivant les revendications 1 à 4, **caractérisé en ce que**, avant le traitement, la solution saline aqueuse contient approximativement 2000 mg/l de COT, approximativement 105 g/l de Na⁺ et approximativement 60 g/l de Cl⁻, tandis que, après traitement, le perméat obtenu contient approximativement 40 mg/l de COT, approximativement 105 g/l de Na⁺ et approximativement 60 g/l de Cl^{-.}
